# EUROPÄISCHE PATENTSCHRIFT

(11) **EP 0 356 567 B1**
(45) Veröffentlichungstag und Bekanntmachung des Hinweises auf die Patenterteilung: **22.12.1993**
(21) Anmeldenummer: 88114366.3
(22) Anmeldetag: 02.09.1988
(51) Int. Cl.: H04M 1/66, H04M 3/42

(54) **Verfahren und Anordnung zur Sprechererkennung in einer Fernsprechvermittlungsanlage**
Method and apparatus for speaker recognition in a telephone exchange
Procédé et arrangement de reconnaissance du locuteur dans un central téléphonique

(43) Veröffentlichungstag der Anmeldung: 07.03.1990
(73) Patentinhaber: SIEMENS AKTIENGESELLSCHAFT, 80333 München (DE)
(72) Erfinder: Vollert, Emmeran, Dipl.-Ing. (FH), D-8152 Grosshöhenrain (DE); Humpert, Georg, Dipl.-Ing. (FH), D-8000 München 60 (DE)

(56) Entgegenhaltungen:
- EP-A- 0 045 941
- DE-A- 2 305 094
- DE-A- 3 328 059
- DE-A- 3 643 838
- FR-A- 2 361 784
- ATN NACHRICHTENTECHNISCHE BERICHTE, Nr. 1, Mai 1984, Seiten 27-31, Backnang, DE; W. BRAUMANN et al.: "Der digitale Fernsprechapparat"
- AT & T TECHNICAL JOURNAL, Band 65, Nr. 5, September/Oktober 1986, Seiten 68-74, New York, US; M. BIRNBAUM et al.: "A voice password system for access security"

## Beschreibung

Die Erfindung betrifft ein Verfahren und eine Anordnung zur Sprechererkennung in einer Fernsprechvermittlungsanlage nach dem Oberbegriff des Patentanspruchs 1 bzw. 4.

Aus der deutschen Offenlegungsschrift DE 36 43 838 A1 ist bereits eine Spracherkennungseinrichtung für diensteintegrierende Kommunikationsanlagen, insbesondere Fernsprechvermittlungsanlagen bekannt. An die Vermittlungsanlage ist eine Spracherkennungseinrichtung angeschlossen, wobei über genau einen B-Kanal Nutzdaten übertragen und über den D-Kanal eine Information an die Spracherkennungseinrichtung übertragen wird, welche die Adresse und/oder die Rufnummer eines anrufenden Anschlußorgans bezeichnet.

Aus der deutschen Offenlegungsschrift 2 305 094 ist bereits ein Verfahren und ein System zur breitbandigen Nachrichtenübertragung bekannt. Dabei ist eine Übertragung von breitbandigen Signalen, wie beispielsweise Video-Signalen, insbesondere Fernseh-Telefon-Signalen über bestehende Leitungen beispielsweise über Teilnehmer-Anschlußleitungen oder Ortsverbindungsleitungen geringer Bandbreite vorgesehen.

Aus dem AT & T Technical Journal, September/October 1986, Volume 65, Issue 5, Seiten 68-74 ist bereits ein als "A Voice Password System for Access Security" bezeichnetes System und ein Verfahren zur Sprecherverifikation bekannt. Das System ist an ein Telefonnetz angeschlossen und besteht aus einer sogenannten Sprachverifikationseinheit, einem Rechner und einer betriebstechnischen Einrichtung. Zu verifizierende Sprecher haben im Rahmen eines Verifikationsversuches in ein mit dem System verbundenes Fernsprechendgerät eine Identifikationszahl einzugeben und einen aus mehreren Paßworten bestehenden Satz (password phrase) zu sprechen. Die Sprachproben werden über das Telefonnetz übertragen und der Sprachverifikationseinheit zugeführ. Für die dort eintreffenden Signale werden zunächst Autokorrelationskoeffizienten berechnet. Im Anschluß werden diese Autokorrelationskoeffizienten in LPC (linear predictive coding)- Koeffizienten umgewandelt; diese wiederum werden nach der Cepstrum-Technik modifiziert. Die modifizierten Koeffizienten werden schließlich einer weiteren Prozedur (channel normalization) unterzogen. Die Durchführung der verschiedenen Prozeduren führt insgesamt zwar zu geringen Fehlerraten, erfordert aber auch zur Eliminierung von Störeinflüssen, die sich durch die Übertragung der Sprachproben über das Telefonnetz ergeben, einen erheblichen Aufwand.

Der Erfindung liegt die Aufgabe zugrunde, ein Verfahren der eingangs genannten Art anzugeben, das Rechenaufwand für die Sprechererkennung verringert.

Die Lösung dieser Aufgabe erfolgt erfindungsgemäß mit den Merkmalen des Patentanspruchs 1.

Als erfindungswesentlich ist zunächst anzusehen, daß eine Vorverarbeitung der Sprachproben bereits im Fernsprechendgerät durchgeführt wird. Die Sprachproben selbst werden nicht in analoger Form über das Telefonnetz übertragen; vielmehr werden sie bereits im Fernsprechendgerät digitalisiert. Sie unterliegen damit keinen übertragungsspezifischen Störeinflüßen, denen Analogsignale unterliegen.

Als erfindungswesentlich ist auch anzusehen, daß mit der doppelten Abtastrate die doppelte Anzahl von Abtastwerten gebildet wird. Damit werden insbesondere Oberwellenanteile der Sprachsignale, die die personenspezifische Klangfärbung charakterisieren, auch räumlich entfernten Sprechererkennungseinrichtungen zur Verfügung gestellt. Besondere Relevanz für eine sichere Sprechererkennung haben Frequenzanteile der Sprachproben im Bereich zwischen 3 und 4,5 KHz. In diesem Bereich liegt die signifikante sprecherspezifische dritte und vierte Resonanzstelle (Formant) des Vokaltraktes. Der vierte Formant liegt üblicherweise bei Männerstimmen zwischen 3 und 4 KHz und bei Frauenstimmen zwischen 3 und 4,5 KHz.
Üblicherweise gestatten Telefonleitungen eine Übertragung von Signalen mit einer Bandbreite von nur 3,2 KHz. Die Erfindung ermöglicht trotz dieser vorgegebenen Einschränkung jedoch eine Übertragung der sprechersignifikanten, höherfrequenten Oberwellenanteile oberhalb von 3,2 KHz.
Gegenüber dem Stand der Technik wird bei gleicher Sprechererkennungsqualität der Rechneraufwand verringert, bei gleichem Rechneraufwand wird eine höhere Sprechererkennungsqualität erzielt.

Nach einer weiteren Ausführungsform der Erfindung werden im Rahmen des Sprechererkennungsversuches neben den Sprachproben sprecherindividuelle alphanumerische Zeichen darstellende Informationen eingegeben, wobei zur Durchführung des Vergleichs der Referenzsprachproben und der im Rahmen des Sprechererkennungsversuchs eingegebenen Sprachproben die Referenzsprachproben mittels der sprecherindividuellen alphanumerischen Zeichen darstellenden Informationen ausgewählt werden. Führt dieser Vergleich zu einem ersten Signal, das eine Erkennung des betreffenden Sprechers bezeichet, wird eine Eingabe vorgegebener Befehle in die Vermittlungsanlage freigegeben. Das Verfahren gemäß der Erfindung läßt sich also in Verbindung mit weiteren Prozeduren verwenden, die in Abhängigkeit einer Sprechererkennung durchführbar sind.

Die Erfindung wird nun anhand der Zeichnungen beschrieben.

Es zeigen:
- Fig. 1: ein erfindungsgemäßes System zur Sprechererkennung bestehend aus einer Fernsprechvermittlungsanlage mit Fernsprechendgeräten, und
- Fig. 2: ein Blockschaltbild eines Fernsprechendgerätes nach Fig. 1.

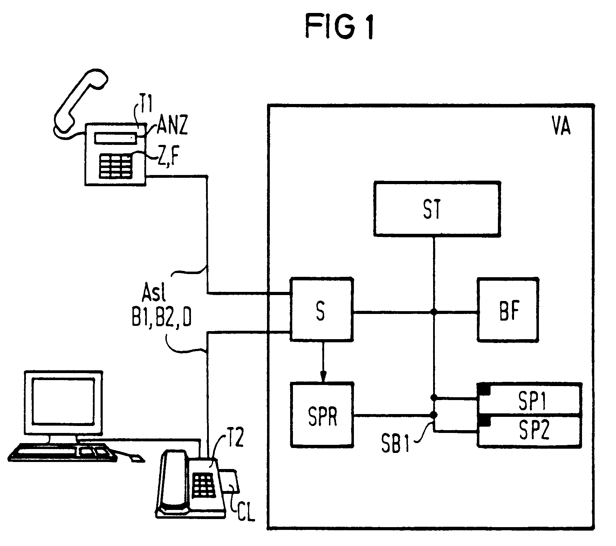

Das in Figur 1 schematisch dargestellte System zur Sprechererkennung besteht aus einer Fernsprechvermittlungsanlage VA und aus an diese angeschlossenen Fernsprechendgeräten T1, T2. Die Vermittlungsanlage VA, die lediglich in ihren der eigentlichen Sprechererkennung dienenden Teilen schematisch dargestellt ist, besteht aus einer programmierbaren Systemsteuerung ST, die über einen ersten Systembus SB1 Zugriff zu einer peripheren Schnittstelle S, zu einer Sprechererkennungseinrichtung SPR (speech recognition), zu ersten und zweiten Speicherbereichen SP1, SP2 und zu einer Bedienerführungseinrichtung BF hat. Dem Steuerwerk ST ist ein in der Figur nicht dargestellter Speicher zugeordnet, in dem ein Programm zum Systembetrieb abgelegt ist.

Als Systemkomponenten ST, SB1, S, SPR, SP1, SP2 und BF können handelsübliche Komponenten verwendet werden.

An die Schnittstelle S sind Fernsprechendgeräte anschließbar, die beispielsweise wie die in der Figur dargestellten Endgeräte T1 und T2 ausgebildet sind. Das Fernsprechendgerät T1 weist beispielsweise eine optische Anzeigeeinrichtung ANZ auf. Mit Zifferntasten Z und Funktionstasten F sind Wählziffern und Signale erzeugbar, die über die Schnittstelle S dem Steuerwerk ST der Vermittlungsanlage VA zuführbar sind. Derartige Signale bezeichnen beispielsweise persönliche Identifizierungen des jeweiliegen Systembenutzers und können die in der Vermittlungsanlage durchzuführende Sprechererkennung in der Weise unterstützen, daß bei einem Vergleich von Sprachproben, die im Rahmen eines Sprechererkennungsversuches in das System eingegeben werden, und von bereits im System abgelegten Referenzsprachproben die Auswahl dieser zuletzt genannten Sprachproben mit Hilfe der persönlichen Identifizierungskennungen erfolgt. Anstelle einer Eingabe von personenidentifizierenden Ziffern mittels Funktionstasten F kann auch vorgesehen sein, daß diese Ziffern auf einer Chipkarte abgespeichert sind und dem System über einen Chipkartenleser CL, wie er symbolisch in Verbindung mit dem Fernsprechendgerät T2 dargestellt ist, zugeführt werden.

Die Fernsprechendgeräte T1 und T2 sind über Anschlußleitungen As1 mit der Vermittlungsanalge VA verbunden. Die Vermittlungsanlage VA ist insbesondere als ISDN (Integrated Services Digital Network)-fähiges System ausgebildet. Informationen zwischen den Endgeräten und der Vermittlungsanlage werden bidirektional in mindestens einem Nutzkanal B und einem Signalisierungskanal D übertragen. Die in Figur 1 dargestellte Schnittstelle S der Vermittlungsanlage VA hat, sofern diese als ISDN-fähige Kommunikationsnebenstelle ausgebildet ist, unter anderem die Funktion einer digitalen Teilnehmeranschlußbaugruppe (SLMD), an die die Fernsprechendgeräte T1 und T2 über in der Figur 1 nicht dargestellte Sₒ-Schnittstellen angeschlossen sind. Die Vermittlungsanlage VA kann auch als öffentliche Vermittlungsanlage ausgebildet sein.

Die an sich bekannte Bedienerführungseinrichtung BF bildet, ausgelöst durch entsprechende Befehle der Steuerung ST Informationen, die den zu erkennenden Sprechern in einer der Bildung von sprecherspezifischen Referenzsprachmerkmalsinformationen dienenden Trainingsphase und bei den eigentlichen Sprechererkennungsversuchen an den Fernsprechendgeräten T1, T2 signalisiert werden. Die Signalisierung kann akustisch über die Hörmuschel oder optisch durch die optische Anzeigeeinrichtung ANZ erfolgen. Zu den Signalisierungsinformationen gehören die Aufforderung, Sprachproben im Rahmen einer der Bildung von sprecherspezifischen Referenzsprachmerkmalsinformationen dienenden Trainingsphase oder eines Sprechererkennungsversuches einzugeben, gegebenenfalls Texte, die von dem zu erkennenden Sprecher nachzusprechen sind, sowie das positive oder negative Ergebnis eines Sprechererkennungsversuches. Erfolgt diese Signalisierung akustisch, so umfaßt die Einrichtung BF eine Sprachsyntheseeinrichtung, die die jeweiligen Informationen sprachlich bildet. Bei einem positiven Ergebnis eines Sprechererkennungsversuches bildet das Steuerwerk ST ein erstes Signal, das eine Erkennung des betreffenden Sprechers bezeichnet, oder ein zweites Signal, das eine nicht erfolgte Erkennung des betreffenden Sprechers bezeichnet. In Abhängigkeit der Sprechererkennungsversuchsergebnisse kann dem betreffenden Sprecher die Inanspruchnahme von Diensten freigegeben oder verwehrt werden. Solche Dienste sind beispielsweise Leistungsmerkmale in Kommunikationsvermittlungsanlagen und Dienste im kommerziellen Bereich (Bankgeschäfte).

Die Vermittlungsanlage VA, die lediglich hinsichtlich der für die Sprechererkennung notwendigen Komponenten schematisch dargestellt ist, führt die Sprechererkennung in an sich bekannter Weise durch. Erfindungsgemäß werden zwei Nutzkanäle B1 und B2 zur Übermittlung von Sprachprobeninformationen von den Endgeräten T1, T2 zur Vermittlungsanlagen verwendet. Der Sprechererkennungseinrichtung SPR wird die doppelte Zahl von Sprachprobenabtastwerten zugeführt als dies aufgrund der Bandbreite eines Übertragungskanals B1 oder B2 möglich ist.

Die Speicherbereiche SP1 und SP2 dienen der Aufnahme von Informationen, die im Zusammenhang mit der Sprechererkennung gebildet werden. Für die Erkennung verschiedener Sprecher sind zunächst in einer Trainingsphase aus Sprachproben sprecherspezifische Sprachmerkmale zu extrahieren. Die entsprechenden Informationen werden als Referenzinformationen in den ersten Speicherbereichen SP1 abgelegt. Die zweiten Speicherbereiche SP2 dienen der Aufnahme von Informationen, die bei einem Sprechererkennungsversuch extrahierte Sprachmerkmale bezeichnen.

Im Rahmen eines Sprecherekennungsversuchs kann ein zu erkennender Sprecher dem in der Vermittlungsanlage VA zugeordneten Steuerwerk ST eine nur ihm zugeordnete personenidentifizierende Information übermitteln. Diese Information dient der gezielten Auswahl von Referenzinformationen bei einem im Rahmen eines Sprechererkennungsversuchs durchgeführten Vergleichs mit den Informationen, die bei dem Sprechererkennungsversuch extrahierte Sprachmerkmale bezeichnen. Die den Sprechern ursprünglich zugeordneten Informationen können in den ersten Speicherbereichen SP1 in Zuordnung zu den sprecherspezifischen Referenzinformationen abgespeichert werden, während die im Rahmen eines Sprechererkennungsversuchs übermittelten personenidentifizierenden Informationen gemeinsam mit dem bei dem Sprechererkennungsversuch gebildeten Sprachmerkmalsinformationen in den zweiten Speicherbereichen SP2 abgespeichert werden.

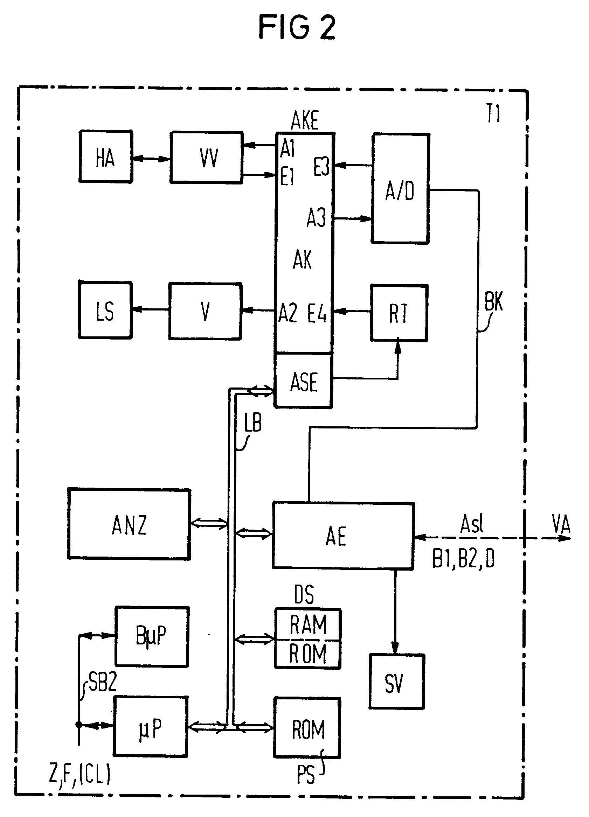

Fig. 2 zeigt ein Blockschaltbild eines Fernsprechendgerätes T1 das einen Teil des Systems zur Sprechererkennung gemäß der Erfindung bildet. Die zentrale Einrichtung zur Steuerung der Teilnehmer-Bedienerprozeduren, zur Steuerung aller im Endgerät zu übermittelnder akustischer Signale und zur Steuerung der Signalisierung mit der Vermittlungsanlage ist durch ein Mikroprozessorsystem µP realisiert. Beispielsweise kann dieses Mikroprozessorsystem µP durch einen Siemens Mikroprozessor SAB 80 C 31 gebildet sein. Das Mikroprozessorsystem µP veranlaßt zudem die Abtastung der in eine Sprechkapsel eines Handapparats HA des Fernsprechendgeräts T1 eingegebenen Sprachproben, speichert diese in einen Pufferspeicher (DS RAM) ein und liest sie zur Übertragung an die Vermittlungsanlage VA aus. Über einen aus Steuer-, Adreß- und Datenleitungen gebildeten lokalen Bus LB ist das Mikroprozessorsystem µP mit einem Programmspeicher PS und einem Datenspeicher DS verbunden. Der in ROM-Speichertechnik realisierte Programmspeicher PS ist beispielsweise für ein maximal 64 kByte umfassendes Programm ausgelegt. Der ebenfalls beispielsweise 64 kByte umfassende Datenspeicher DS kann beispielsweise zur Hälfte einen in ROM-Speichertechnik ausgeführten Festspeicher - für Festdaten, Parameterdaten und Tabellen - und zur anderen Hälfte einen in RAM-Speichertechnik ausgeführten Speicher zur Speicherung von Sprachprobenabtastwerten und gegebenenfalls benutzerindividueller Daten enthalten. Das Mikroprozessorsystem µP weist zusätzlich eine in Fig. 2 nicht dargestellte serielle Busschnittstelle auf. Diese serielle Busschnittstelle ist über einen seriellen Bus SB2 mit einem Bedienfeld-Mikroprozessorsystem BµP verbunden. Der serielle Bus SB2 ist außerdem mit den Zifferntasten Z, den Funktionstasten F und gegebenenfalls mit einem Chipkartenleser (CL, Fig. 1) verbunden.

In dem Bedienfeld-Mikroprozessorsystem BµP werden die von den Bedienelementen Z, F und gegebenenfalls CL erzeugten codierten Informationen erkannt, über den seriellen Bus SB2 zum Mikroprozessorsystem µP seriell übertragen und dort zu Signalisierungsinformationen und zu lokalen Bedienerführungsinformationen weiterverarbeitet, die vorzugsweise als optische Anzeigen auf entsprechenden Anzeigeeinrichtungen ANZ dargestellt werden.

Die an einen lokalen Bus LB angeschlossene Anzeigeeinrichtung ANZ ist beispielsweise durch ein LCD-Display (zwei Zeilen à 24 Zeichen) realisiert.

Das Fernsprechendgerät ist über eine Anschalteeinrichtung AE mit der Teilnehmeranschlußleitung Asl verbunden. Über diese Teilnehmeranschlußleitung Asl kommuniziert das Fernspechendgerät mit der zugehörigen Vermittlungsanlage VA, die eine zentrale Steuerung für die Durchführung der eigentlichen Vermittlungsvorgänge und die ihr zugeordnete besondere Steuerung ST aufweist die der Realisierung der Prozeduren im Zusammenhang mit der Sprechererkennung dient.

Über die Teilnehmeranschlußleitung Asl werden beispielsweise 64 kBit/s umfassende Nutzinformationen in zwei Nutzinformationskanälen B1, B2 und 16 kBit/s umfassende Signalisierungsinformationen in einem Signalisierungsinformationskanal D bidirektional übermittelt. Die im Signalisierungsinformationskanal D übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die für Kommunikationsendgeräte-Kommunikationsanlagen-Signalisierung eingesetzten Protokollschichten sind als Bitübertragungsschicht (Schicht 1), als Sicherungsschicht (Schicht 2) und als Vermittlungsschicht (Schicht 3) definiert. Die Bitübertragungsschicht, auch als physikalische Ebene bezeichnet, besorgt das Übermitteln der Informationen in den Nutzinformations- und Signalisierungskanälen B1, B2, D gleichzeitig in beiden Richtungen. Hierbei ist das Aktivieren, Deaktivieren und Betreiben des Fernsprechendgerätes eingeschlossen. Die Sicherungsschicht übernimmt für die anschließende Vermittlungsschicht das gesicherte Übermitteln der Signalisierungsinformationen zwischen der Vermittlungsanlage und dem Endgerät. Dies kann beispielsweise durch eine HDLC-Übermittlungsprozedur oder durch eine Last-Look-Prozedur erfolgen. Unter Last-Look-Prozedur ist ein mehrmaligen Übermitteln der Inforamtionen zu verstehen, die in der Empfangseinrichtung mindestens zweimal hintereinander als gleich erkannt und außerdem verschieden von den zuletzt empfangenen gültigen Signalisierungsinformation sein muß, um als gültig erkannt zu werden.

Die Vermittlungsschicht dient dem Aufbau, Überwachen und Abbau der Kommunikationsverbindungen sowie zur Steuerung und Kontrolle der durch die Vermittlungsanlage KA unterstützten Leistungsmerkmale. In der Anschlußeinrichtung werden im wesentlichen die Funktionen der Bitübertragungsschicht (Schicht 1) unter Steuerung des Mikroprozessorsystems µP realisiert. In der Anschalteeinrichtung AE sind folgende wesentliche Funktionen enthalten:
- Übertragungstechnische Anpassung an die Teilnehmeranschlußleitung Asl
- Übermitteln der Signalisierungs- und Nutzinformationen durch nach einem Zeitgetrenntlage-Übertragungsverfahren gebildeten Signalen
- Trennen von Nutz- und Signalisierungsinformationen und Weiterleiten an die entsprechenden Einrichtungen und
- Auskoppeln einer über die Anschlußleitung Asl übertragenen und von der Vermittlungsanlagen VA bereitgestellten elektrische Energie und deren Weiterführung an eine fernsprechendgeräteinterne Stromversorgung SV.

In der Stromversorgung SV wird die von der Anschlußeinrichtung AE übermittelte elektrische Energie in eine für den Betrieb des Fernsprechendgeräts erforderliche positive und negative Speisespannung umgesetzt. Vorzugsweise ist diese Stromversorgung SV durch eine platzsparende Schaltregler-Stromversorgung realisiert.

Die in der Anschlußeinrichtung AE von über die Anschlußleitung As1 übermittelten Informationen abgetrennten Signalisierungsinformationen werden lokalbusgemäß aufbereitet und über den lokalen Bus LB an das Mikroprozessorsystem µP übermittelt. Im Mikroprozessorsystem µP werden diese Signalisierungsinformationen gemäß den der Sicherungsschicht und Vermittlungsschicht zugeordneten Funktionen weiterverarbeitet und die entsprechenden Reaktionen - z. B. Ansteuern von Ausgabeeinheiten - eingeleitet.

Die in der Anschlußeinrichtung AE abgetrennten Nutzinformationen gelangen über einen Bus BK an eine Analog/Digital-Umsetzeinrichtung A/D. In dieser werden aus den von der Anschlußeinrichtung AE abgegebenen digitalisierten Nutzinformationssignalen, die Sprachsignale darstellen, analoge Sprachsignale gebildet. Die an einem weiteren Eingang der Analog/Digital-Umsetzeinrichtung A/D ankommenden analogen Sprachsignale werden in digitale Sprachsignale umgesetzt. Die Codierung bzw. Decodierung der analogen bzw. digitalen Sprachsignale erfolgt durch das bekannte, standardisierte PCM-Verfahren. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen.

Durch den Akustikkoppler AK werden die von der Analog/Digital-Umsetzeinrichtung A/D ankommenden analogen Signale entweder nur an einen ersten Ausgang A1 oder an den ersten und an einen zweiten Ausgang A1, A2 vermittelt. Ausgang A1 ist über einen Vorverstärker VV mit dem Handapparat des Fernsprechendgerätes verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von der im Handapparat HA angeordneten Sprechkapsel abgegebenen Sprachsignale über den Vorverstärker VV an einen ersten Eingang E1 des Akustikkopplers AK.

Die analogen Sprachsignale werden durch den Akustikkoppler AK an einen mit der Analog/Digital-Umsetzeinrichtung A/D verbundenen dritten Ausgang A3 vermittelt. Diese analogen Sprachsignale werden in der Analog/Digital-Umsetzeinrichtung A/D in digitale Signale umgesetzt und in der Anschlußeinrichtung AE in den zur Anschlußleitung As1 übermittelten Nutzinformationsstrom eingefügt. Ist im Fernsprechendgerät das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Fernsprechendgerät angeordneten Lautsprecher LS.

Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umgesetzt, durch die die Verbindungswege im Akustikkoppler AK eingestellt werden. Zusätzlich steuert die Ansteuereinrichtung ASE einen Ruftongenerator RT, der je nach Ansteuerung unterschiedliche Ruftöne mit entsprechenden Rufrythmen erzeugt. Diese Ruftöne werden über den Akustikkoppler AK unter Steuerung der Ansteuereinrichtung ASE an den Handapparat HA und/oder den Lautsprecher LS vermittelt.

Ein Sprechererkennungsversuch kann im Rahmen des Verfahrens gemäß der Erfindung durch einen in ein Endgerät T1, T2 mittels der Wähltasten Z, der Funktionstasten F oder des Chipkartenlesers CL eingegebenen Befehl ausgelöst werden, der der Steuerung ST der Vermittlungsanlage VA zugeführt wird. Die Steuerung ST gibt die Eingabe von Sprachproben in den Handapparat HA des betreffenden Endgeräts T1, T2 frei. Die Freigabe wird an dem Endgerät T1, T2 akustisch und/oder optisch signalisiert. Hierzu bildet die in der Vermittlungsanlage VA angeordnete Einrichtung BF ausgelöst durch einen entsprechenden Befehl der Steuerung ST (Figur 1) Signalisierungsinformationen, die dem Mikroprozessorsystem µP der Endgeräte T1 bzw. T2 zugeführt werden. Das Mikroprozessorsystem µP gibt, ausgelöst durch diese Signalisierungsinformationen, einen Befehl an die Analog/Digitalumsetzrichtung A/D, die damit die sonst übliche Abtastrate (erste Frequenz) von 8 KHz auf 16 KHz erhöht.

Die dann in das Mikrophon des Handapparats HA eingegebenen Sprachproben werden nach Vorverstärkung (VV) durch die Einrichtung A/D mit 16 KHz abgetastet. Die Anschlußeinheit AE belegt, ausgelöst durch die oben genannten, von der Einrichtung BF übermittelten Signalisierungsinformationen, beide Nutzdatenoder Dateninformationskanäle B1 und B2. Die gebildeten Abtastwerte werden über die Anschlußeinrichtung AE erfindungsgemäß abwechselnd in Kanälen B1 und B2 der Vermittlungsanlage VA zugeführt. Über die Schnittstelle S führt die Steuerung ST die Abtastwerte gegebenenfalls nach einer Zwischenspeicherung zur Sprechererkennungseinrichtung SPR, der damit für die eigentliche Sprechererkennung die doppelte Zahl von Sprachprobenabtastwerten zur Verfügung steht.

Den zeitlich zuerst auf den Kanälen B1 und B2 übermittelten Sprachprobenabtastwerten wird im Fernsprechendgerät durch das Mikroprozessorsystem µP im Zusammenwirken mit der Anschlußeinrichtung AE je ein Synchronisierbit vorangestellt. Die Steuerung ST erkennt die Zeit zwischen dem Auftreten beider Synchronisierbits, speichert die abwechselnd über die Kanäle B1 und B2 empfangenen Abtastwerte beispielsweise in den zweiten Speicherbereichen SP2 zwischen und liest die abgespeicherten Werte zur eigentlichen Sprechererkennung nacheinander abzüglich der festgestellten Zeitdifferenz aus. Die ausgelesenen Abtastwerte werden nun der Einrichtung SPR zugeführt.

Personenidentifizierende Informationen, die gegebenenfalls von den zu erkennenden Sprechern im Rahmen eines Sprechererkennungsversuchs abzugeben sind, werden durch Betätigung der Wähltasten Z, der Funktionstasten F oder durch Einführen einer Chipkarte in einem Chipkartenleser CL gebildet. Diese Informationen werden vom Bedienfeld-Mikroprozessorsystem BµP erkannt, über den seriellen Bus SB2 zum Mikroprozessorsystem µP seriell übertragen und dort zu Signalisierungsinformationen weiterverarbeitet. Anschließend werden die Signalisierungsinformationen über den lokalen Bus LB, die Anschlußeinrichtung AE und die Anschlußleitung ASL in dem Signalisierungsinformationskanal D zur Vermittlungsanlage VA übertragen. Die Steuerung ST speichert die personenidentifizierenden Informationen vorzugsweise in den zweiten Speicherbereichen SP2 zwischen und ruft sie für die Durchführung des Vergleichs von Referenzsprachproben mit im Rahmen des Sprechererkennungsversuchs gebildeten Sprachproben aus den Speicherbereichen SP2 ab.

## Patentansprüche

1. Verfahren zur Sprechererkennung in einer Fernsprechvermittlungsanlage (VA), bei dem im Rahmen eines Sprechererkennungsversuchs Sprachproben in an die Fernsprechvermittlungsanlage (VA) angeschlossene Fernsprechendgeräte (T1, T2) eingegeben und der Vermittlungsanlage (VA) zugeführt werden, wobei die Sprachproben mit einer vorgegebenen Abtastfrequenz abgetastet werden und die gebildeten Abtastwerte einer in der Vermittlungsanlage (VA) angeordneten Einrichtung (ST) zugeführt werden, die durch Vergleich von ursprünglich in der Vermittlungsanlage (VA) abgelegten Referenzsprachproben und von im Rahmen des Sprechererkennungsversuchs eingegebenen Sprachproben ein erstes Signal, das eine Erkennung des betreffenden Sprechers bezeichnet, oder ein zweites Signal bildet, das eine nicht erfolgte Erkennung des betreffenden Sprechers bezeichnet,
**dadurch gekennzeichnet,**
daß die vorgegebene Abtastfrequenz für die in ein Fernsprechendgerät (T1,T2) eingegebenen Sprachproben das Doppelte der Abtastfrequenz beträgt, die nach dem Abtasttheorem für das benutzte Sprachband erforderlich ist, und daß die gebildeten Abtastwerte abwechselnd in mindestens zwei Nutzdatenkanälen (B1, B2) von dem Fernsprechendgerät (T1,T2) zu der Vermittlungsanlage (VA) übertragen werden.

2. Verfahren nach Anspruch 1,
**dadurch gekennzeichnet,**
daß in der Vermittlungsanlage (VA) die Zeitdifferenz zwischen den jeweils ersten über beide Nutzdatenkanäle (B1,B2) eintreffenden Abtastwerten festgestellt wird, daß die Abtastwerte in der Vermittlungsanlage (VA) in einem Speicher (SP2) zwischengespeichert, nacheinander abzüglich der Zeitdifferenz aus diesen Speicher (SP2) ausgelesen und einer Sprechererkennungseinrichtung (SPR) zugeführt werden.

3. Verfahren nach Anspruch 1 oder 2,
**dadurch gekennzeichnet,**
daß im Rahmen des Sprechererkennungsversuches neben den Sprachproben sprecherindividuelle alphanumerische Zeichen darstellende Informationen eingegeben werden, daß zur Durchführung des Vergleichs der Referenzsprachproben und der im Rahmen des Sprechererkennungsversuchs eingegebenen Sprachproben die Referenzsprachproben mittels der sprecherindividuellen alphanumerischen Zeichen darstellenden Informationen ausgewählt werden, und daß mit dem ersten Signal eine Eingabe vorgegebener Befehle in die Vermittlungsanlage (VA) freigegeben wird.

4. Anordnung zur Sprechererkennung in einer Fernsprechvermittlungsanlage (VA),
**gekennzeichnet durch**
folgende Komponenten:
- eine programmierbare Systemsteuerung (ST) mit Zugriff über einen Systembus (SB1) auf
- eine Sprechererkennungseinrichtung (SPR),
- erste und zweite Speicherbereiche (SP1, SP2),
- mindestens eine Schnittstelle (S), mit der in einem ISDN-Komunikationsnetz digitale Fernsprechendgeräte (T1,T2) anschließbar sind, die eine Vorrichtung (µP,HA, A/D) zur Abtastung von Sprachproben mit einer Abtastfrequenz, die das Doppelte der nach dem Abtasttheorem für das benutzte Sprachband erforderlichen Abtastfrequenz beträgt, und eine Vorrichtung (AE) zur Belegung zweier Nutzdatenkanäle (B1,B2) mit den so gebildeten Abtastwerten aufweisen.

5. Anordnung nach Anspruch 4,
**dadurch gekennzeichnet,**
daß die Systemsteuerung (ST) mit einer Einrichtung (BF) zur akustischen und/oder optischen Bedienerführung verbunden ist.

## Claims

1. Method for speaker recognition in a telephone exchange (VA), in which in the course of a speaker recognition test, speech specimens are input into telephone terminals (T1, T2) connected to the telephone exchange and supplied to the exchange (VA), the speech specimens being sampled with a predetermined sampling frequency and the samples formed being supplied to a device (ST) arranged in the exchange (VA), which device, by comparing reference speech specimens originally stored in the exchange (VA) and speech specimens input in the course of the speaker recognition test, forms a first signal that indicates a recognition of the respective speaker or a second signal that indicates a non-recognition of the respective speaker, characterized in that the predetermined sampling frequency for the speech specimens input into a telephone terminal (T1, T2) is twice the sampling frequency required for the voice band used according to the sampling theorem, and in that the samples formed are transmitted alternately in at least two user data channels (B1, B2) from the telephone terminal (T1, T2) to the exchange (VA).

2. Method according to Claim 1, characterized in that the time difference between the respective first samples arriving via both user data channels (B1, B2) is determined in the exchange (VA), in that the samples are temporarily stored in a memory (SP2) in the exchange (VA), are successively read out of said memory (SP2) minus the time difference and are supplied to a speaker recognition means (SPR).

3. Method according to Claim 1 or 2, characterized in that in the course of the speaker recognition test, speaker-specific information representing alphanumeric characters is input in addition to the speech specimens, in that for carrying out the comparison of the reference speech specimens and the speech specimens input in the course of the speaker recognition test, the reference speech specimens are selected by means of the speaker-specific information representing alphanumeric characters, and in that an input of predetermined instructions into the exchange (VA) is released with the first signal.

4. Arrangement for speaker recognition in a telephone exchange (VA), characterized by the following components:
- a programmable system controller (ST) with access via a system bus (SB1) to
- a speaker recognition means (SPR),
- first and second memory areas (SP1, SP2),
- at least one interface (S) to which digital telephone terminals (T1, T2) in an ISDN communications network can be connected, which terminals have a device (µP, HA, A/D) for sampling speech specimens with a sampling frequency which is twice the sampling frequency required for the voice band used according to the sampling theorem, and a device (AE) for occupying two user data channels (B1, B2) with the samples thus formed.

5. Arrangement according to Claim 4, characterized in that the system controller (ST) is connected to a means (BF) for acoustic and/or optical user guidance.

## Revendications

1. Procédé d'identification d'un locuteur dans une installation de commutation téléphonique (VA), dans laquelle, dans le cadre d'un essai d'identification d'un locuteur, des échantillons vocaux sont introduits dans des terminaux téléphoniques (T1,T2) raccordés à l'installation de commutation téléphonique (VA), et sont envoyés à l'installation de commutation (VA), les échantillons vocaux étant échantillonnés avec une fréquence d'échantillonnage prédéterminée et les valeurs d'échantillonnage formées étant envoyées à un dispositif (ST) qui est dans l'installation de commutation (VA) et qui forme, par comparaison entre des échantillons vocaux de référence, mémorisés initialement dans l'installation de commutation (VA) et des échantillons vocaux introduits dans le cadre de la tentative d'identification d'un locuteur, un premier signal, qui désigne une identification du locuteur concerné, ou un second signal, qui désigne un échec d'identification du locuteur considéré,
caractérisé par le fait
que la fréquence d'échantillonnage prédéterminée est égale, pour les échantillons vocaux introduits dans un terminal téléphonique (T1,T2), au double de la fréquence d'échantillonnage, qui est nécessaire selon le théorème d'échantillonnage pour la bande de signaux vocaux utilisée, et que les valeurs d'échantillonnage formées sont transmises alternativement dans au moins deux canaux (B1,B2) de données utiles, par le terminal téléphonique (T1,T2) à l'installation de commutation (VA).

2. Procédé suivant la revendication 1, caractérisé par le fait que, dans l'installation de commutation (VA), l'intervalle de temps entre les premières valeurs d'échantillonnage respectives introduites par l'intermédiaire des deux canaux (B1,B2) de données utiles est fixé, que les valeurs d'échantillonnage sont mémorisées temporairement dans une mémoire (SP2) dans l'installation de commutation (VA), sont lues successivement avec déduction de l'intervalle de temps, à partir de cette mémoire (PS2) et sont envoyées à un dispositif (SPR) d'identification du locuteur.

3. Procédé suivant la revendication 1 ou 2, caractérisé par le fait que, dans le cadre de la tentative d'identification du locuteur, outre les échantillons vocaux, on introduit également des informations représentant des caractères alphanumériques prévus individuellement pour chaque locuteur, que pour l'exécution de la comparaison entre les échantillons vocaux de référence et les échantillons vocaux introduits dans le cadre de la tentative d'identification du locuteur, les échantillons vocaux de référence sont sélectionnés au moyen d'informations représentant des signaux alphanumériques prévus individuellement pour chaque locuteur, et qu'une introduction d'instructions prédéterminées est libérée, dans l'installation de commutation (VA), par le premier signal.

4. Dispositif pour identifier un locuteur dans une installation de commutation téléphonique (VA), caractérisé par les éléments suivants :
- une unité de commande programmable (ST) du système, avec accès par l'intermédiaire d'un bus système (SB1) à
- un dispositif (SPR) d'identification du locuteur,
- des première et seconde zones de mémoire (SP1,SP2),
- au moins une interface (S), au moyen de laquelle peuvent être reliés, dans un réseau de communication (ISDN), des terminaux téléphoniques numériques (T1,T2), qui comportent un dispositif (µP, HA, A/D) pour prélever des échantillons vocaux à une fréquence d'échantillonnage qui est égale au double de la fréquence d'échantillonnage nécessaire selon le théorème d'échantillonnage pour la bande utile de signaux vocaux, et un dispositif (AE) pour occuper deux canaux (B1,B2) de données utiles avec les valeurs d'échantillonnage ainsi formées.

5. Dispositif suivant la revendication 4, caractérisé par le fait que l'unité de commande (ST) du système est connectée à un dispositif (BF) servant à réaliser un guidage acoustique et/ou optique de l'opérateur.
